# EUROPEAN PATENT APPLICATION

(11) **EP 4 654 112 A1**
(43) Date of publication of application: **26.11.2025**
(21) Application number: 25172424.1
(22) Date of filing: 24.04.2025
(51) Int. Cl.: G06Q 30/0241

(54) **DIGITAL CONTENT CREATION**

(30) Priority: 22.05.2024 US 202418671133
(71) Applicant: GOOGLE LLC, Mountain View CA 94043 (US)
(72) Inventor: Mokadam, Laxmikant Kishor, Mountain View, 94043 (US); Kim, Jyoung S, Mountain View, 94043 (US); Yang, Zedong, Mountain View, 94043 (US); Zhou, Xiaolan, Mountain View, 94043 (US); Joshi, Vineet Vijay, Mountain View, 94043 (US); Atluri, Sandeep, Mountain View, 94043 (US); Holden, Krista, Mountain View, 94043 (US); Pruthi, Garima, Mountain View, 94043 (US)
(74) Representative: Marks & Clerk GST

(57) **Abstract**

Methods, systems, and apparatus, including computer-readable storage media for generating model-generated digital content based on prompts and other inputs. The prompts may be, for example, inputs for modifying digital content associated with an existing campaign. The prompts may include national language input. The natural language prompts may include, for example, a theme, information related to an upcoming event, the topic of the campaign, or the like. The other inputs may also include information associated with the campaign creator's style. The information associated with the campaign creator's style may be in the form of embeddings. A system implementing the methods described herein can generate the digital content for the modified campaign based on the received inputs received from the campaign. The generated digital content may be in the form of text, image, or the like.

## Description

### BACKGROUND

A campaign management platform manages and serves digital content to user computing devices of users forming part of an audience of computing devices targeted for receiving the digital content. Different events throughout the year, such as local, national, and/or international events, present unique opportunities for content providers to reach the audience of computing devices targeted for receiving the digital content. A new campaign can be created for any number of events. However, the creation of a new campaign and associated digital content can be a time-consuming and resource-intensive process. Additionally, creating seasonal campaigns typically requires specialized knowledge and skills for the campaign to be effective.

Digital video components are generally more complex and more challenging to create compared to text or image components. In this regard, video components generally require more time and expenses to create and produce than text or image components. For instance, video components must account for numerous different devices and formats through which the video component will be displayed. Each device and format may have its own unique set of challenges. For example, video components that are intended for television have different requirements than video components that are intended for social media. Additionally, video ads that are created for mobile devices have different requirements than video ads that are created for desktop computers, televisions, or other larger displays.

Small and medium-sized businesses (SMBs) often struggle with creating effective video components because they typically have limited budgets and resources, which makes it difficult to produce high-quality video components that target different devices and formats. Additionally, SMBs often lack the expertise and experience necessary to create effective video components or the resources to hire someone who does. Thus, video components produced by SNMs may not be as effective as those created by those with the proper resources and experience.

### BRIEF SUMMARY

The technology is generally directed to generating digital content from prompts and other inputs to artificial intelligence (AI) models. The prompts may be, for example, inputs for modifying digital content associated with an existing campaign. The prompts include national language input. The natural language prompts may include, for example, a theme, information related to an upcoming event, the topic of the campaign, or the like. The inputs may include information associated with the campaign creator's style. The inputs associated with the campaign creator's style may be in the form of embeddings. A system implementing the methods described herein can generate the digital content for the modified campaign based on the received inputs received from the campaign. The generated digital content may be in the form of text, image, video, audio, or the like.

The technology is directed to artificial intelligence (AI) powered tools that can enhance existing digital video components and simplify and automate the creation of new digital video components. The technology includes a digital video component creation tool that leverages existing assets to generate digital video components, a voice-over tool that can add voice-overs, generated from text to, video components, and a video component evaluation tool that can evaluate video components for conformity with attributes associated with best practices for video creatives.

Other implementations of this and other aspects include corresponding computer systems, apparatus, and computer programs recorded on one or more computer storage devices, each configured to perform the actions or operations of the methods.

### BRIEF DESCRIPTION OF THE DRAWINGS

Figure 1 is a block diagram of an example digital content generation system in communication with a campaign management platform, according to aspects of the disclosure.
Figure 2 is a block diagram of another example digital content generation system in communication with the campaign management platform, according to aspects of the disclosure.
Figure 3 is a block diagram of another example digital content generation system in communication with the campaign management platform, according to aspects of the disclosure.
Figure 4 is an example illustration of a video component generated from a set of assets, according to aspects of the disclosure.
Figure 5 is an example illustration of a generated video component, according to aspects of the disclosure.
Figure 6 depicts a flow diagram of an example process for generating digital content, according to aspects of the disclosure.
Figure 7 depicts a flow diagram of another example process for generating digital content, according to aspects of the disclosure.
Figure 8 is a block diagram illustrating one or more models, such as for deployment in a datacenter housing one or more hardware accelerators on which the deployed models will execute for generating digital content according to prompts generated and stored in accordance with aspects of the disclosure.
Figure 9 is a block diagram of an example computing environment for implementing the digital content generation system.

### DETAILED DESCRIPTION

### Overview

Aspects of the disclosure relate to a system for dynamically generating artificial intelligence (AI) model-generated digital content based on modification inputs, existing digital content, and other inputs. Modification inputs are data at least partially characterizing changes and/or updates to be made to the digital content of an existing campaign. Existing digital content is digital content, such as text, images, videos, etc., that is associated with a campaign creator. The existing digital content may be digital content used in an existing campaign, digital content provided for output on a campaign creator's website or mobile application, or the like. The other inputs may include, for example, embeddings associated with a theme identified from the modification inputs, style embeddings associated with the existing digital content, or the like. The digital content, once generated, can be served to a target audience of computing devices. The generated digital content may be a modified version of the existing digital content and/or be new digital content.

The generated digital content can be images, text, video, audio, or the like. The digital content is generated to match the style of the campaign creator. The style is the way the digital content is presented, *e.g.,* to create a mood or feeling or to convey a message to the target audience. The style is determined based on the existing digital content for a campaign creator. For example, embeddings for existing digital content associated with the campaign creator are determined. The embeddings may be style embeddings, e.g., embeddings identifying and/or quantifying the style of the content associated with the campaign creator.

The style embeddings are used to determine a style vector. The style vector corresponds to a weight or scale factor that is provided as input into the AI model during execution of the model. The style vector is determined based on an average distance between at least some of the style embeddings associated with the campaign creator. According to some examples, the style vector may be determined based on the average distance between each of the style embeddings associated with the campaign creator. The AI model uses the style vector, in part, to generate digital content in the style of the campaign creator.

Previously, generating digital content in a given style required generating new digital content from scratch, *e.g.*, without using existing digital content. Moreover, to ensure the new digital content matches a style of the content creator and theme of the campaign, time consuming brainstorming sessions to produce an idea as well as expensive photoshoots and post-processing to execute the idea were necessary. By generating digital content in the style of the campaign creator and matching a given theme, the system can accurately generate and serve digital content to a target audience of computing devices. In particular, the system can accurately generate digital content that matches the style of the campaign creator, relates to the theme of the campaign, identified based on the modification inputs provided to the AI model, and includes features that the target audience will engage with. By generating digital content that matches the style and theme, and, additionally, captures the target audience, the AI model improves the efficiency and accuracy of generating and serving digital content.

Further, generative models are not deterministic. For example, even if the same input is provided to the model, the model does not necessarily provide the same output each time. As an example, if the input to the generative model includes prompts indicating the style of the content creator, the output of the generative model may have a different style each time. To ensure consistency for a given content creator, a style vector is provided as input to the model. The style vector provides consistency for the style of the generated output, thereby addressing the problem of control over the style of the generated output.

According to some examples, the digital content is generated to match the context of the campaign and/or campaign creator. The context includes, for example, information associated with when the digital content is served to an audience, the format of the digital content, *e.g.*, text, video, images, audio, or the like, whether the digital content was provided for output on a website or in a mobile application, etc.

The campaign creator may, in some examples, correspond to a content creator. References to the campaign creator and/or content creator may be used throughout interchangeably. Accordingly, the use of campaign creator or content creator is not intended to be limiting. Rather, the campaign creator and content creator can be considered the same creator.

Additional aspects of the disclosure relate to content generation tools that leverage AI, including machine learning and generative AI, to assist with the creation and enhancement of digital video components. The tools may include creation tools, including a video component creation tool that leverages existing components to generate new video components. The tools may also include enhancement tools, such as a voice-over tool, which can alter the content of a video component. In this regard, the voice-over tool may add voice-overs, generated from inputted text to video components. The tools may also include evaluation tools that determine how well video components conform with attributes associated with best practices for video creatives so the video components may be edited to increase their effectiveness. The evaluation tools may include a video component evaluation tool, described in detail herein.

The tools may be applications, such as a web-based application provided to a client device from a server or a standalone application executing on the client device, or frameworks which may be incorporated into other applications. Moreover, although the tools are described individually herein, each tool may be combined into a single application or framework, or otherwise be implemented in conjunction with other tools within a single application or framework. For instance, an application may include some or all the features of the video component creation tool, the voice-over tool, and the video component evaluation tool. In another example, an application or framework may include the voice-over tool. Further, the tools may be implemented in individual frameworks or applications which may be packaged together. For instance, an application may include the voice-over tool and the video component evaluation tool.

Although each of the tools described herein is categorized as a creation tool, enhancement tool, or evaluation tool, these categorizations are merely for explanation and reference purposes. Each tool is not limited to the functions of the category to which they are assigned in this disclosure. For instance, the video component creation tool may create video components, enhance the created video components, and evaluate the created video components, thereby satisfying each of the three categories.

The systems and methods described above and herein allow for campaign creators to modify digital content of existing campaigns and/or generate digital content for a campaign efficiently and effectively through intuitive natural language inputs and style embeddings. The AI models can transform a campaign creator's existing digital content to capture different events, themes, topics, etc. The digital content generated by the AI model adapts a campaign creator's existing digital content to correspond to various scenarios, *e.g.*, sales events, product launches, market trends, or the like, while maintaining the style and/or context of the campaign creator. The AI model, in conjunction with a campaign management platform, allows for campaigns and the associated digital content to be created, managed, and optimized to reach target audiences.

### Example Systems

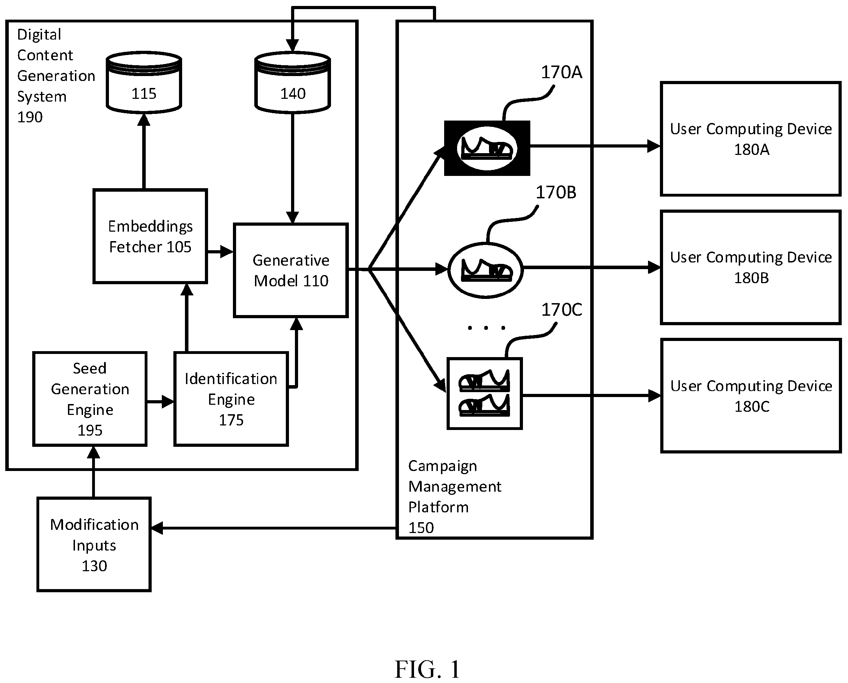

Figure 1 is a block diagram of an example digital content generation system 190 in communication with a campaign management platform 150, according to aspects of the disclosure. In some examples, the digital content generation system 190 and the campaign management platform 150 can be part of a larger system, while in other examples, the digital content generation system 190 and the campaign management platform 150 are implemented on separate devices in one or more physical locations.

The digital content generation system 190 and the campaign management platform 150 can be in communication over a network. In some examples, the digital content generation system 190 does not communicate with a campaign management platform, and instead receives input and generates output in direct communication with user computing devices 180A, 180B, and 180C. Some or all the data forming the modification inputs 130 can be received by the identification engine 175 through the campaign management platform 150. In some examples, the digital content generation system 190 is configured to perform some or all the operations or components described as performed by the campaign management platform 150.

The campaign management platform 150 may be configured to manage the serving of content to user computing devices 180A, 180A, and 180C, and provide a user interface for doing so. For example, the user interface can be configured as a web interface, an API, a standalone software application, etc., for organizing and causing digital content to be served to different user computing devices in accordance with different targeting parameters.

Content delivery may be organized as one or more campaigns, each campaign logically associated with some subject digital content. Campaigns may be further subdivided into groups, representing potential variations on the type of content to be served. Groups may be further subdivided into line items, representing even more specificity in the digital content to be served, the time at which to serve the content, and/or the computing devices that are a target of the content. The time at which to serve the content corresponds to the flight for the content. Digital content, the period of time at which the digital content is to be served to different user computing devices, and/or targeting parameters for selecting which user computing devices to serve the content to may be selected at either the campaign, group, or line item level.

After the campaign management platform 150 receives the content, a flight for the content, and targeting parameters for the computing devices to serve the content, the campaign management platform 150 is configured to serve the content to the user computing devices 180A-C. In some examples a separate component, *e.g.*, a separate engine running on the same device or different devices than the platform, may cause the content to be served, e.g., by directly serving the content, or sending a request or command to another system configured to serve the content. The flight may be as short as the time it takes to send the content to the user computing devices 180A-C. In other examples, the flight may be any length of time, such as hours, days, weeks, and so on. Serving the content can include sending the content over a network to be displayed or outputted by the devices, or causing content stored on the user computing devices to be displayed or otherwise outputted.

The digital content generation system 190 includes seed generation engine 195, identification engine 175, an image embeddings fetcher 105, a generative model 110, an image embeddings repository 115, and a digital content repository 140 which can be implemented, in different examples, on one or more computing devices in one or more physical locations. The seed generation engine 195 is configured to receive the modification inputs 130. The modification inputs 130 can be retrieved through an interface, for example an API or standalone software application configured to retrieve the description and/or values from a source, such as a database or other repository. In some examples, the data is retrieved from the campaign management platform 150, as shown in Figure 1.

The modification inputs 130 is data at least partially characterizing the changes to be made to digital content of an existing campaign. For example, the modification inputs may be related to a topic, good, service, event, etc. (collectively referred to herein as "event") that is the subject of digital content to be generated. As an example, the modifications may be related to an upcoming event, and the modification inputs 130 can include the name of the event, a description of the event, keywords related to the event, and so on. The modification inputs 130 can include natural language, tags, titles, etc. The digital content generation system 190 can automatically retrieve components of the modification inputs 130 or the modification inputs 130 from different sources, including the campaign management platform 150 and from user input.

In some examples, the modification inputs 130 include data related to the campaign under which digital content is to be served. For example, the modification inputs 130 may include group information, line items, flight information, targeting information, etc. associated with the campaign.

The modification inputs 130 can include data of different modalities, such as, images, video, computer drawings, audio, text, and so on. For example, the modification inputs 130 can include a text description of the event, the name of the event, and images or videos of the event in some context, or the like.

The seed generation engine 195 is configured to generate relevant seed information about an event for a product or service of the campaign creator. For example, the seed generation engine 195 is configured to identify, based on the modification inputs 130, an event that will be used to update an existing campaign and/or existing digital content. Based on the identified event, the seed generation engine 195 generates relevant seed information about the event. For example, the seed generation engine 195 can generate, from the modification inputs 130, a natural language prompt describing elements of each of the modification inputs 130. The prompt can include the textual information included as part of the inputs 130, as well as textual descriptions of inputs of other modalities provided, e.g., text descriptions of images, video, or audio transcripts. The seed generation engine 195 is further configured to, in some examples, generate relevant seed information for events based on the audience of computing devices targeted for receiving the digital content.

As another example, the digital content generation system 190 may receive modification inputs 130 to transform existing digital content for a new cake menu release for winter. The modification inputs 130 may be received as user inputs provided via the campaign management platform 150. In some examples, the modification inputs 130 may be prompts that are automatically and/or semi-automatically generated by another generative model. The landing page or website associated with the existing digital content may be "example.com/cakes". Seed generation engine 195 may receive the modification inputs 130, e.g., the request to transform the existing digital content for a new cake menu release for winter. Seed generation engine 195 may, based on the modification inputs, generate new information that provides additional details about the landing page, e.g., "example.com/cakes", and event information, e.g., new cake menu release for winter. In some examples, the seed generation engine 195 may use one or more prompting techniques to create more relevant information. For example, the seed generation 195 may provide a rephrase and response prompt to improve the modification inputs 130.

The output, *e.g.,* the seed information, of the seed generation engine 195 is provided to the identification engine 175. The identification engine 175 identifies a theme to be used for fetching relevant image embeddings. For example, the modification inputs 130 may indicate that an existing campaign is to be modified for a start of summer sale. As an example, the natural language input of the modification inputs 130 may be "start of summer sale." The identification engine 175, based on the seed information from the seed generation engine 195, may determine that the theme is "summer" and/or "sale."

According to some examples, the identification engine 175 can generate, from the seed information, a natural language prompt corresponding to a theme. For example, the identification engine 175 may be a generative model that may receive, as input, textual information, *e.g.,* the seed information, and provide, as output, textual information, *e.g.*, the theme. The output of the identification engine 175 may be a prompt that is used to query embeddings fetcher 105.

In some examples, the identification engine 175 creates embedding tags to represent the type and/or kind of embeddings needed to transform the existing digital content. In some examples, identification engine 175 creates similar data to generate text assets. By keeping identification engine 175 separate from the seed generation engine 195, embeddings fetcher 105, and/or generative model 110 allows for the generative model 110 to generate digital content and/or other assets, e.g., text assets, that are relevant to each other. As an example, identification engine 175 may generate tags such as cakes, winter, and snow for generating an image when the modification input is "new cake menu release for winter." Similar tags may be generated for other digital content, such as text.

The theme may be provided to embeddings fetcher 105. The embeddings fetcher 105 may access the embeddings repository 115. The embeddings repository 115 may store image embeddings to be used to represent the event, *e.g.,* start of summer sale, or theme, *e.g.*, summer, of the modified campaign. The embeddings within the embeddings repository 115 may include, for example, image, video, text, audio, etc. embeddings. According to some examples, the image embeddings fetcher 105 may query the embeddings repository 115 to identify one or more relevant embeddings. Relevant image embeddings may be, for example, embeddings related to the event and/or theme associated with the modification inputs 130. According to some examples, the relevant embeddings may be embeddings within a threshold distance of the theme. For example, the theme may correspond to a given embedding. Relevant image embeddings may be embeddings within a threshold distance of the given embedding associated with the theme.

In some examples, rather than using the embeddings fetcher 105 as an intermediary, the seed generation engine 195 may be configured to query the embeddings repository 115 to identify relevant embeddings based on the determined theme. For example, embeddings with similar tags may be embeddings within a threshold distance of the tag generated by identification engine 175. In some examples, embeddings fetcher 105 uses clustering techniques to find the nearest matches.

As another example, the embeddings fetcher 105 can generate embeddings instead of retrieving embeddings from a pre-populated repository. For example, the embeddings fetcher 105 can implement an AI model trained to receive the seed information as one or more modalities and identify corresponding images that are described by or are relevant to the seed information. The embeddings fetcher 105 may process the images further through a model configured to generate embeddings from input, or the embeddings fetcher 105 may be trained to output image embeddings directly from the see information, e.g., by being trained end-to-end on inputs labeled with corresponding image embeddings.

Having the seed generation 195, identification engine 175, and embeddings fetcher 105 as separate modules reduces hallucination and sensitive output by adding and controller filters between each module. For example, hallucinations may be caused, in part, by the model perceiving (e.g., images, videos, etc.) or understanding (e.g., text, etc.) things that are not there or perceived in a way that a human does not anticipate, leading to a nonsensical output by the generative model 110. Sensitive outputs may be outputs, e.g., digital content and/or text, that violates a content policy. Separating the digital content generation system 190 into separate modules, e.g., seed generation engine 195, identification engine 175, embeddings fetcher 105, etc., allows for filters to be implemented between each module. The filters may be configured to remove data and/or inputs, including modification inputs, that have been identified as causing hallucinations and/or sensitive outputs to occur. In some examples, the filters may remove and/or average out outliers, specific keywords, incomplete data from raw input, etc.

The generative model 110 is an AI model trained to receive the embeddings, the theme, and existing digital content. The AI model is trained to generate digital content based on the received input. The generated digital content can be, for example, informative information, entertainment, advertisements, etc.

Existing digital content may include, for example, existing campaigns, previously generated digital content, digital content associated with the landing page, e.g., website, or mobile application of the campaign creator, or the like. The existing digital content can be represented in various different formats, including numerical formats, categorical formats, textual formats, or other computer-readable formats. The existing digital content stored in digital content repository 140 may be used to identify a style associated with the campaign creator. The style may be, for example, modern, moody, classic, stream-lined, wordy, colorful, abstract, or the like.

The style may be determined based on embeddings associated with the existing digital content for the campaign creator. For example, embeddings for the existing digital content for the campaign creator are determined. As an example, the identification engine 175 will create embedding tags. The embedding tags represent types of embeddings that are needed. The types of embeddings that are needed may be, for example, related to the different style, content types (e.g., video, audio, image, text, etc.), different themes, colors, etc. The embeddings fetcher 105 may use the tags when querying the embedding repository 115. For example, the embeddings fetcher 105 may query the embedding repository using the tags to identify embeddings with similar tags.

An embedding can correspond to a numeric representation in a fixed dimensional space, such as an ordered collection of a fixed number of numeric values. An embedding at least partially encodes some semantic meaning for the text, image, video, etc., represented by the embedding. Embeddings are used to make more direct comparisons with other data represented by the embeddings, especially when the data is of different modalities.

For example, the embedding can be a vector or a matrix of floating point values or other types of numeric values. An embedding can represent features of existing digital content using less data, allowing for more efficient processing. For example, rather than having the generative model 110 receive the existing digital content as input, which can be large in size, *e.g.*, gigabytes (GB), the generative model 110 receives the embeddings, which are relatively small in size, *e.g.*, kilobytes (KB).

Embeddings can be pre-generated using one or more AI models trained for generating the embeddings. An embedding model is a model trained for generating embeddings, which can be augmented, for example, to classify an input image or data of another modality corresponding to the type of embeddings generated by the embedding model. Embeddings can be used to search for images using a set of pre-determined embeddings. For example, text embeddings corresponding to text search terms can be compared with image embeddings for a set of images, to identify text/image embeddings within a similarity threshold of one another. Embeddings can be saved and queried, for example using databases configured for processing vectors or other data structures used to represent the embeddings.

The system can be configured to receive the existing digital content associated with a given campaign creator and generate embeddings. The embeddings may be, for example, style embeddings. For example, the embeddings engine may receive the existing digital content associated with the campaign creator. The embeddings engine may generate style embeddings associated with the style of the campaign creator. In some examples, the embeddings engine identifies the style of the campaign creator.

For example, the existing digital content may be clustered based on visual similarities. The visual similarities may be, for example, based on the presence of certain colors, shapes, objects, features, characteristics, text, or the like. The style embeddings are then determined for the clustered digital content. By first clustering the images and then determining the style embeddings, the computational efficiency of the system is increased as embeddings for like images are determined, as compared to determining the embeddings for each image. The embeddings may be stored in a database, memory, storage system, or the like that can be accessed by the system, such as image embeddings repository 115 and/or digital content repository 140. For example, the generative model 110 may access the database to retrieve embeddings as part of processing training data and/or inference data to generate digital content. The generated digital content may be, for example, images, audio, video, text, or the like.

The style embeddings associated with the existing digital content are used to determine a style vector associated with the campaign creator. In some examples, the style vector may be referred to as a scale or weight. The style vector for a given campaign creator may be determined based on the average of at least some of the differences between some of the embeddings of the existing digital content of the campaign creator. In some examples, the style vector may be based on the average of all the differences between the embeddings. The style vector is provided as input to the generative model 110 when generating digital content. The style vector allows for the concepts from the modification inputs 130 to be retained while also retaining the style of the content creator. In some examples, the generative model 110 may avoid hallucinations due to the style vector.

According to some examples, the style vector associated with the campaign creator may be determined using a model. For example, an AI model may be trained to predict the style vector. The AI model may be configured to receive, as input, text embeddings, style embeddings, and the inertia associated with the cluster of embeddings and provide, as output, a prediction of the style vector. The text embeddings may be based on the natural language inputs, *e.g.*, prompt, provided as part of the modification inputs 130.

In some examples, the style vector may be a range of values. The range of values may be provided as input to the generative model 110 such that the generative model 110 generates a plurality of digital content, each with slightly different styles based on the different style vector values within the range. In such an example, the digital content generation system 190 may filter the digital content such that only some of the generated digital content is provided for output. In another example, the digital content generation system 190 may provide, as output, the generated digital content to the campaign creator, *e.g.,* via campaign management platform 150.

According to some examples, rather than generating the style vector to be provided as input into the generative model 110, the generative model 110 may determine the style vector while generating the digital content. For example, the generative model 110 may determine the style vector based on the inputs received, *e.g.*, inputs received from identification engine 175, embeddings fetcher 105, and existing digital content stored in digital content repository 140. The generative model 110 may generate digital content based on the determined style vector.

By determining the style vector on a campaign creator basis, the output, *e.g.*, generated digital content, of the generative model 110 has a style corresponding to the existing style of the campaign creator. This allows for the generative model 110 to output campaign creator-specific digital content that reflects the style, look, feel, and so on associated with the campaign creator. In contrast, without the campaign creator-specific style vector, the output of the generative model 110 would be in the same style for all campaign creators, regardless of their known style differences. Generative models are not deterministic, such that the same input does not result in the same output. By providing the style vector as input to the model, the style vector drives the consistency of generated digital content for a campaign creator. The style vector provides control and/or consistency over the style of the content for the campaign creator, even as other inputs change.

According to some examples, the style vector is stored in memory with the existing digital content. For example, during execution, the generative model 110 receives, as input, the image embeddings fetched by image embedding fetcher 105, the theme identified by identification engine 175, and existing digital content, including the style vector. The generative model 110 provides, as output, the generated digital content having a style corresponding to the style vector and matching the theme identified by the identification engine 175.

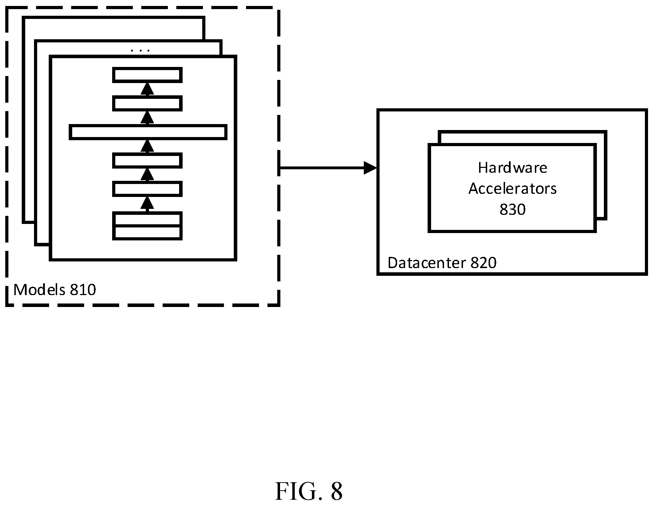

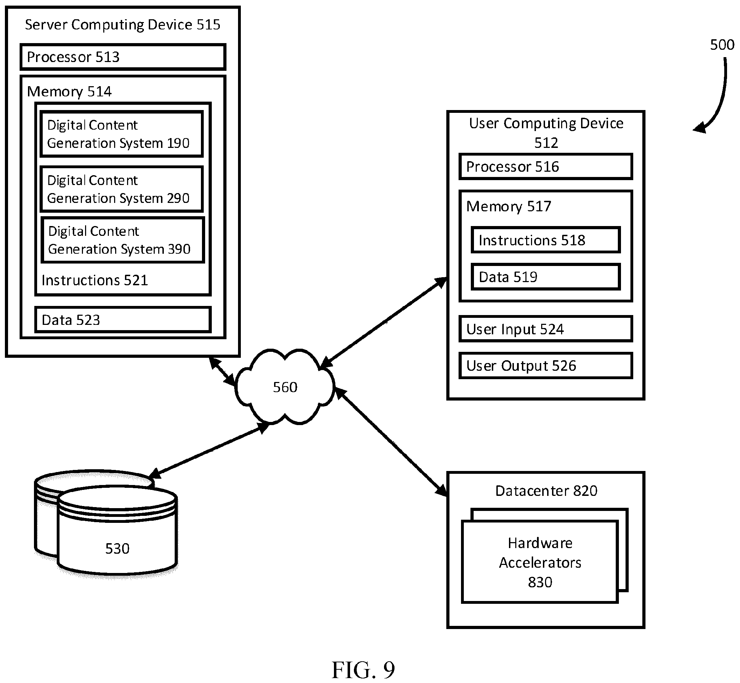

For example, and as described also with reference to Figures 8 and 9, the generative model 110 can include one or more generative models, such as language models, foundation models, and/or graphical models. The generative model 110 may be trained to general digital content of different modalities, either as separate models or as one multimodal model. In examples in which the generative model 110 is trained to generate digital content from one or more different modalities, the generative model 110 receives input or some indication as to whether to generate digital content as a combination of text, image, video, etc.

The generative model 110 can implement one or more encoders and decoders for generating trained representations of input data and decoding the representations for generating new digital content. These representations can be discrete or continuous representations of input data, for example represented as vectors. The encoders can include transformers with self-attention mechanisms for encoding input data, which may be received by the model 110 as a series of tokens, frames, or other data units. The encoding layer of the model 110 can feed into an addition and normalization layer, and then further processed by a non-linear model, such as a neural network.

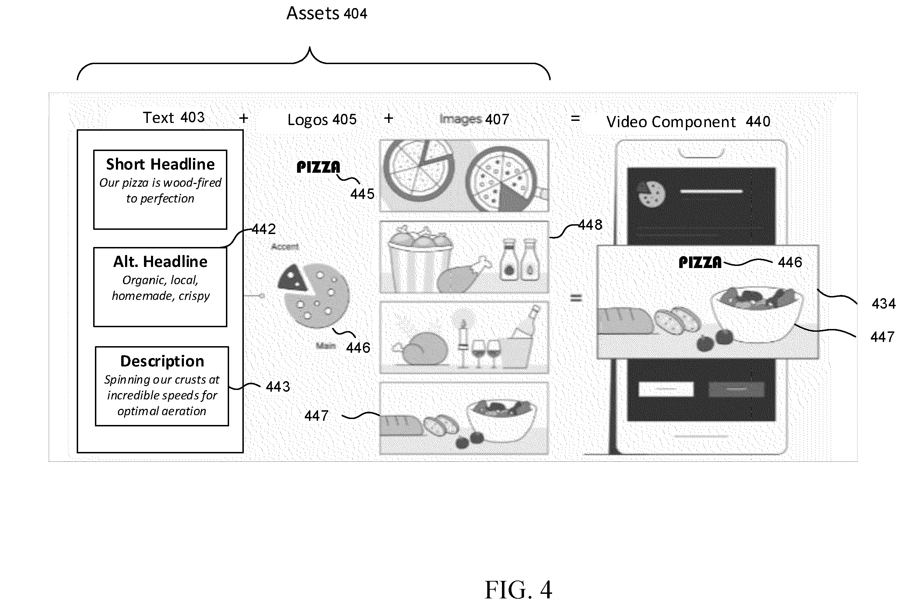

Decoders of the generative model 110 can receive and process the representation of the input data to obtain output corresponding to some digital content responsive to the input data. For generating images or video from text, the model 110 can encode a prompt using one or more trained text encoders. The model 110 can implement a diffusion-based model or other model technique for taking the text representation as input and generating a corresponding image or other digital content item responsive to the input. Diffusion models are a class of generative models that convert noise into samples from a learned data distribution. In general, any AI model technique for generating digital content from a text prompt may be used to implement the generative model 110. Details for training example models like the generative model 110 as described herein with reference to Figure 4.

The generative model 110 can generate digital content items 170A, 170B, and 170C. The digital content items 170A-170C can be generated by processing the theme identified by identification engine 175, the image embeddings fetched by image embeddings fetcher 105, and existing digital content. The model 110 processes these inputs to generate digital content item 170A. Similarly, other inputs with different themes and/or events can be used to generate other content. These other prompts, when processed by the generative model 110, causes the generative model to generate digital content items 170B and 170C, for targeting user computing devices 180B and 180C, respectively.

According to some examples, the generative model 110 can generate digital content items as a new content item and/or a modification of a previous content item. For example, when generating the new content item, the generative model 110 can generate a new content item matching the modification inputs 130 as well as the style of existing digital content. The generative model 110 may provide, as output, one or more new digital content items that represent different aspects of the product or service matching the modification inputs and the style of the campaign creator. In some examples, the generative model 110 may replace the background of an existing digital content item to match the background to the modification inputs and style of the campaign creator.

Although only three user computing devices 180A-C are shown in Figure 1, in general thousands or more computing devices may be targeted for serving the digital content items 170A-C. Content serving may be performed automatically, for example in response to a request from the computing device for content. The campaign management platform 150 can determine devices that are to be targeted by different targeting parameter values, for example, based on previous interaction with the devices, voluntary information provided from the device to the campaign management platform 150, or the like. In some examples, the device may not regularly interact with user input, but instead be deployed somewhere to output or display content at the deployed location, e.g., a metro transit station, a billboard, etc.

The digital content items 170A-170C can vary in style, format, or manner in which product or service is described or portrayed. The variations are due to how the model 110 is trained to generate digital content responsive to different modification inputs. According to some examples, the variations may be due to the style vector provided as input to the model 110.

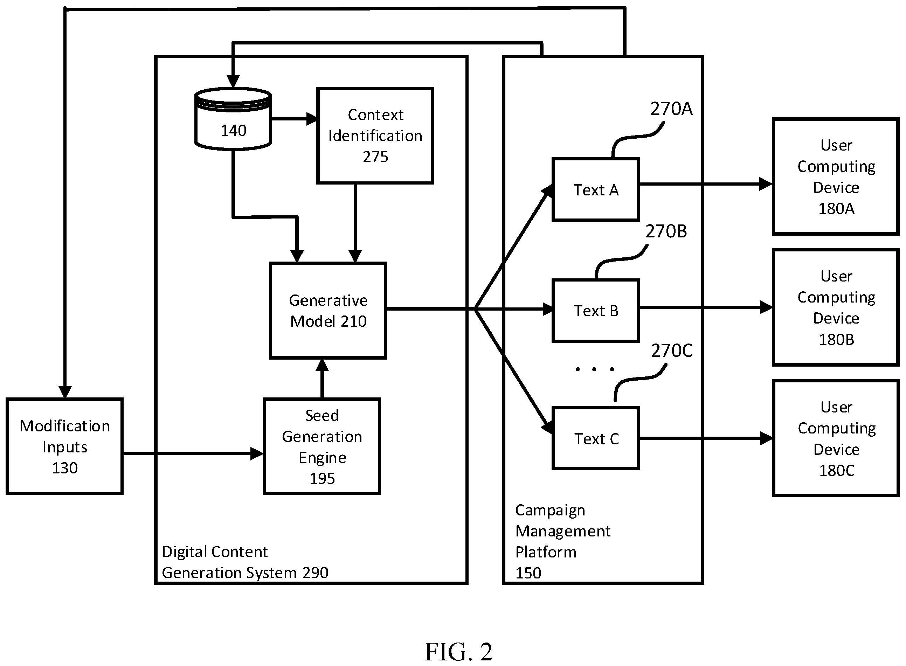

Figure 2 is a block diagram of an example digital content generation system 290 in communication with the campaign management platform, according to aspects of the disclosure. Similar to the digital content generation system 190, the digital content generation system 290 and the campaign management platform 150 can be part of a larger system and/or can be in communication over a network.

The digital content generation system 290 includes seed generation engine 195, context identification engine 275, a generative model 110, and a digital content repository 140 which can be implemented, in different examples, on one or more computing devices in one or more physical locations.

The seed generation engine 195 is configured to receive the modification inputs 130, as described with respect to Figure 1. The modification inputs 130 is data at least partially characterizing the changes to be made to an existing campaign. The seed generation engine 195 is configured to generate relevant seed information about an event for a product or service of the campaign creator. The seed generation engine 195 is further configured to, in some examples, generate relevant seed information for events based on the audience of computing devices targeted for receiving the digital content. The output of the seed generation engine 195 is provided to the generative model 210. The output of the seed generation engine 195 may be a natural language prompt describing elements of each of the modification inputs 130.

According to some examples, upon receipt of modification inputs 130, the digital content generation system 290 identifies existing digital content stored within the digital content repository 140. The existing digital content stored in digital content repository 140 may be used to identify a context associated with the campaign. The context may be, for example, information associated with when the digital content was served to an audience, the format of the digital content, *e.g.*, text, video, images, or the like, whether the digital content was provided for output on a website or in a mobile application, etc. The context identification engine 275 receives and/or retrieves the existing digital content from the digital content repository and identifies the context of the campaign.

The generative model 210 is an AI model trained to receive the context determined by context identification engine 275, the seed information generated by seed generation engine 195, and existing digital content stored in digital content repository 140 and generate digital content. The generative model 210 can generate digital content items 270A, 270B, and 270C. The digital content items 270A-C may be in a text format. The text output by the generative model may be a headline for the campaign, a description for the subject of the campaign, keywords to be included in the campaign, or the like.

The digital content items 270A-270C can be generated by processing the context determined by context identification engine 275, the seeds generated by seed generation engine 195, and existing digital content stored in digital content repository 140. The model 210 processes these inputs to generate digital content item 270A. Similarly, other modification inputs, resulting in different seeds being generated, can be used to generate other content. These other prompts, when processed by the generative model 210, causes the generative model to generate digital content items 270B and 270C, for targeting user computing devices 180B and 180C, respectively.

According to some examples, the generative model 210 can generate digital content items as a new content item and/or a modification of a previous content item. For example, when generating the new content item, the generative model 210 can generate aa new content item matching the modification inputs 130 as well as the style of existing digital content. The generative model 210 may provide, as output, one or more new digital content items that represent different aspects of the product or service matching the modification inputs and the style of the campaign creator. For example, the generated digital content provided as output by the generative model 210 may include text outputs. The text outputs may include modified descriptions, keywords, digital content generation prompts, headlines, etc. that can be used as part of a campaign. The text outputs may be modified based on the modification inputs 130. For example, if the modification inputs 130 included an indication of a summer sale, the description of the product or service associated with the campaign may be modified to relate to a summer sale. As an example, if the original description was "shoes for all seasons" the modified description may be "shoes for summer." Similarly, headlines associated with the product and/or service of the campaign creator, keywords used as part of the campaign, and the like may be updated to reflect the modification inputs 130.

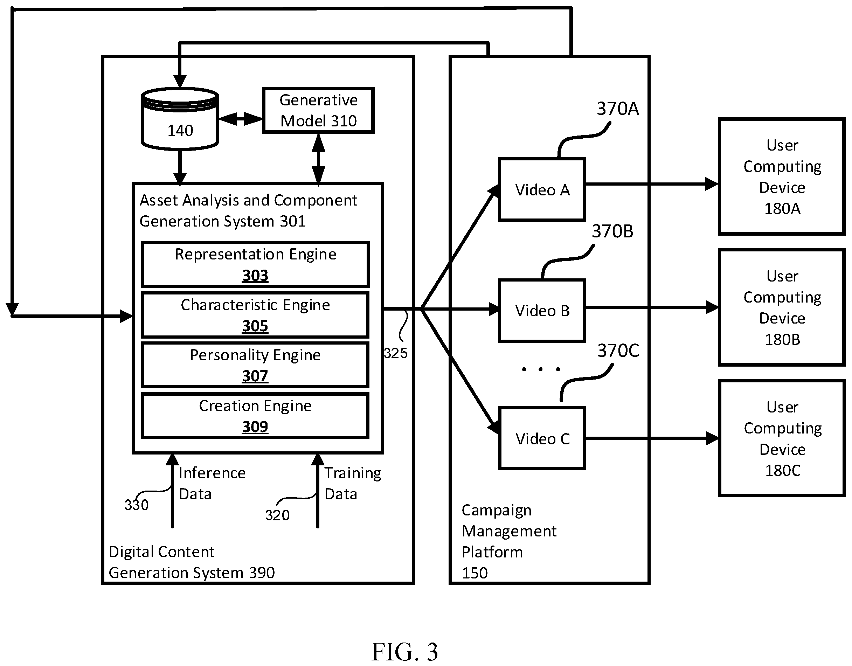

Figure 3 is a block diagram of an example digital content generation system 390 in communication with the campaign management platform 150, according to aspects of the disclosure. Similar to the digital content generation systems 190, 290, the digital content generation system 390 and the campaign management platform 150 can be part of a larger system and/or can be in communication over a network.

The digital content generation system 390 includes digital content repository 140, a generative model 310, and an asset analysis and component generation system (AACGS) 301, which can be implemented on one or more computing devices. The digital content repository 140 may store existing digital content associated with the campaign creator. In some examples, the digital content repository 140 may store the generated digital content generated by AACGS 301.

The generative model 310 is trained to receive the digital content stored in digital content repository 140 and generate features associated with the digital content that can be provided as input to the AACGS 301. The features may be, for example, embeddings, content descriptors, or the like associated with the digital content.

The embeddings may at least partially encode some semantic meaning for the text, image, video, etc., *e.g.,* digital content, represented by the embedding. In some examples, the embeddings may be a representation of the style, personality, and/or characteristics of the existing digital content. The content descriptors may be, for example, a natural language description for the text, image, video, etc.

The output of the generative model 310 may be stored in the digital content repository 140 and/or in another repository in communication with the digital content generation system 390. According to some examples, rather than the AACGS 301 receive the digital content from digital content repository 140, which can be large in size, *e.g.*, gigabytes, the AACGS 301 receives the output of the generative model 310, *e.g.*, embeddings and/ or content descriptions, which are relatively small in size, *e.g.*, kilobytes.

While generative model 310 is shown in Figure 3 as a separate model with respect to the AACGS 301, the generative model 310 may, in some examples, be an engine within AACGS 301. In such an example, the AACGS 301 may be configured to generate features associated with the digital content and use the generated features when generating digital content, *e.g.*, a video component.

During execution, the generative model 310 receives, as input, the existing digital content associated with the content creator, entity, and/or product. The generative model 310 provides, as output, the generated features associated with the existing digital content. The generated features may be, for example embeddings associated with the existing digital content and/or a natural language description of the existing digital content.

For example, and as described also with reference to Figures 8 and 9, the generative model 310 can include one or more generative models, such as language models, foundation models, and/or graphical models. The generative model 310 can implement one or more encoders and decoders for generating trained representations of input data and decoding the representations for generating features associated with existing digital content. These representations can be discrete or continuous representations of input data, for example represented as vectors. The encoders can include transformers with self-attention mechanisms for encoding input data, which may be received by the model 310 as a series of tokens, frames, or other data units. The encoding layer of the model 310 can feed into an addition and normalization layer, and then further processed by a non-linear model, such as a neural network.

Decoders of the generative model 310 can receive and process the representation of the input data to obtain output corresponding to some features responsive to the input data. For generating features from text, the model 310 can encode a prompt using one or more trained text encoders. The model 310 can implement a diffusion-based model or other model technique for taking the text representation as input and generating a corresponding embedding or natural language description responsive to the input. Diffusion models are a class of generative models that convert noise into samples from a learned data distribution. In general, any AI model technique for generating digital content from a text prompt may be used to implement the generative model 310.

The AACGS 301 can be configured to receive inference data 330 and/or training data 320 for use in identifying subsets of assets to include in video components, determining characteristics and personalities of entities, and generating video components. For example, the AACGS 301 can receive the inference data 330 and/or training data 320 as part of a call to an application programming interface (API) exposing the AACGS to one or more computing devices. Inference data 330 and/or training data 320 can also be provided to the AACGS 301 through a storage medium, such as remote storage connected to the one or more computing devices over a network. Inference data 330 and/or training data 320 can further be provided as input through a user interface on a client computing device coupled to the AACGS 301. The inference data 330 can include the assets associated with the entity for which the video component creation tool is generating a new video component. For example, the inference data 330 may be digital content stored in the digital content repository 140.

The AACGS 301 can include one or more engines, also referred to herein as modules and/or models, configured to identify subsets of assets to include in video components, determine characteristics and personalities of entities, and/or generate video components. In this regard, AACGS 301 includes representation engine 303, characteristic engine 305, personality engine 307, and creation engine 309. The representation engine 303 may be trained to identify subsets of assets to include in video components. The characteristic engine 305 may be trained to determine characteristics associated with an entity. The personality engine 307 may be trained to determine the personality of an entity. The creation engine 309 may be trained to generate video components from a collection of assets for an entity.

Engines 303-309 may be implemented as one or more computer programs, specially configured electronic circuitry or any combination thereof. Although Fig. 3 illustrates the AACGS 301 as having four engines, including a representation engine 303, characteristic engine 305, personality engine 307, and creation engine 309, the AACGS 301 may have any number of engines. Moreover, the functionality of the engines described herein may be combined within one or more engines. For instance, the functionalities of the characteristic engine 305 and personality engines 307, including determining characteristics associated with an entity and determining the personality of an entity, respectively, may be handled by a single engine trained to do both functions. Although engines 303-309 are all shown as being in a single AACGS 301, the engines may be implemented in more than one AACGS.

Moreover, engines 303-309 may work in tandem and/or cooperatively. For instance, the characteristic engine 305 and personality engine 307 may provide outputs to the representation engine 303 for use in selecting assets to include in a video component. The representation engine, in turn, may provide the selected assets to creation engine 309 for generating a video component.

The training data 320 can correspond to an artificial intelligence (AI) or machine learning (ML) task for identifying subsets of assets to include in video components, determining characteristics and personalities of entities, generating video components, and other such tasks performed by engines 303-309. The training data 320 can be split into a training set, a validation set, and/or a testing set. An example training/validation/testing split can be an 80/10/10 split, although any other split may be possible. The training data for the representation engine 303 can include examples of assets that have been selected and not selected for inclusion in video components previously. The training data for the characteristic engine 305 may include assets including and not including characteristics of entities. The training data for the personality engine 307 may include assets that have and do not have traits associated with particular entity personalities. The training data for generating video components may include previously created video components and, in some instances, data defining where, when, and/or how assets were incorporated into the previously created video components.

The training data 320 can be in any form suitable for training an engine, according to one of a variety of different learning techniques. Learning techniques for training an engine can include supervised learning, unsupervised learning, and semi-supervised learning techniques. For example, the training data 320 can include multiple training examples that can be received as input by an engine. The training examples can be labeled with a desired output for the engine when processing the labeled training examples. For instance, and with reference to training data for determining which assets to include in a generated video component, assets that have been previously selected for inclusion in a video component may be labeled as such, whereas assets not selected for inclusion in a video component may be labeled as such.

The label and the engine output can be evaluated through a loss function to determine an error, which can be backpropagated through the engine to update weights for the engine. For example, if the machine learning task is a classification task corresponding to determining characteristics of an entity, the training examples can be images labeled with one or more classes categorizing characteristics depicted in provided assets. As another example, a supervised learning technique can be applied to calculate an error between outputs, with a ground-truth label of a training example processed by the engine. Any of a variety of loss or error functions appropriate for the type of task the engine is being trained for can be utilized, such as cross-entropy loss for classification tasks, or mean square error for regression tasks. The gradient of the error with respect to the different weights of the candidate engine on candidate hardware can be calculated, for example using a backpropagation algorithm, and the weights for the engine can be updated. The engine can be trained until stopping criteria are met, such as a number of iterations for training, a maximum period of time, a convergence, or when a minimum accuracy threshold is met.

From the inference data 330 and/or training data 320, the AACGS 301 can be configured to output one or more results related to identifying subsets of assets to include in video components, determining characteristics and personalities of entities, and/or generating video components, generated as output data 325. As an example, the output data 325 can be any kind of score, classification, or regression output based on the input data that is output by engines 303-309. Correspondingly, the AI or machine learning task can be a scoring, classification, and/or regression task for predicting some output given some input.

These AI or machine learning tasks can correspond to a variety of different applications in processing images, video, text, speech, or other types of data to identify subsets of assets to include in video components, determine characteristics and personalities of entities, and/or generate video components. The output data 325 can include instructions associated with these tasks. For instance, the creation engine 309 may be configured to provide the output data 325 as a set of computer-readable instructions, such as one or more computer programs, which can be executed by a computing device to generate a video component with the selected assets and features determined by the creation engine 309. The computer programs can be written in any type of programming language, and according to any programming paradigm, e.g., declarative, procedural, assembly, object-oriented, data-oriented, functional, or imperative. The computer programs can be written to perform one or more different functions and to operate within a computing environment, e.g., on a physical device, virtual machine, or across multiple devices. The computer programs can also implement the functionality described herein, for example, as performed by a system, engine, module, or model. The AACGS 301 can further be configured to forward the output data to one or more other devices configured for translating the output data into an executable program written in a computer programming language. The AACGS 301 can also be configured to send the output data to a storage device for storage and later retrieval. Additionally, or alternatively, the asset creation tool may be configured to receive the output of the AACGS 301 for further processing and/or implementation.

The AACGS 301 is an AI model trained to receive existing digital content stored in digital content repository 140 and/or outputs from generative model 310 and generate digital content, including video components. For example, during execution, the AACGS 301 receives, as input, a prompt for generating digital content, existing digital content, and/or features associated with the existing digital content generated by generative model 310. The AACGS 301 provides, as output, the generated digital content having the personality and/or characteristics corresponding to the entity or product identified by the AACGS 301.

The AACGS 301 can generate digital content items 370A, 370B, 370C, *e.g.,* output data 325. The digital content items 370A-C may be in a video format, *e.g.,* a video component. The digital content items 370A-370C can be generated by processing the existing digital content stored in the digital content repository 140 via engines 303-309. For example, the existing digital content may be processed by the representation engine 303 to identify subsets of assets to include in the digital content item, the characteristic engine 305 to determine characteristics associated with the content creator, personality engine 307 to determine the personality of the content creator, and/or creation engine 309 to generate the digital content item from a collection of assets for the content creator.

The digital content items 370A-370C can be generated by processing the existing digital component by the engines 303-309 of the AACGS 301. When processed by the AACGS 301, the AACGS 301 generates the digital content items 370A-C for targeting user computing devices 180A-C, respectively.

According to some examples, the personality of the content creator may correspond to the style of the content creator. For example, the personality, or style, of the content creator may be determined based on embeddings associated with the existing digital content for the campaign creator. In such an example, the AACGS 301 may include the identification engine 175, embeddings fetcher 105, and embeddings repository 115 of the digital content generation system 190 of Figure 1. For example, embeddings for the existing digital content for the campaign creator are determined. The embeddings fetcher 105 may use the embedding tags created by embeddings fetcher to query the embedding repository 115 to identify embeddings with similar tags. The embeddings associated with the existing digital content are used to determine a personality, e.g., style, vector associated with the campaign creator. The personality vector for a given campaign creator may be determined based on the average of at least some of the differences between some of the embeddings of the existing digital content of the campaign creator. In some examples, the personality vector may be based on the average of all the differences between the embeddings. The personality vector is provided as input to the AACGS 301 and/or creation engine 309 when generating digital content.

The digital component creation tool, *e.g.,* the AACGS 301, may leverage existing digital content stored in the digital content repository 140 to generate new digital components, such as new video components. The existing digital content may include assets, such as text, logos, images, videos, etc., and other such multimedia. As illustrated in Figure 4, the assets 404 of a pizza business include text 403, logos 405, and images 407. It should be understood that assets 404 are non-limiting examples, and other types of assets may be included, including audio assets. Further, any number of assets may be included. In this regard, although Figure 4 illustrates three text assets, two logos, and four images, the assets may include fewer or more text, logo, image, audio, etc., assets.

In operation, the AACGS may analyze the assets to identify a subset of assets that may be included in a new video component. For instance, as illustrated in Figure 4, the digital content generation system 390 may identify assets 404 to identify a subset of the assets to include in the new video component 440. The assets may be identified from existing digital content stored in the digital content repository 140.

The subset of assets may be those determined to satisfy certain criteria, such as being representative of the business, company, individual(s), non-profit, or other such entity the video component is being generated for. For instance, the video component creation tool may determine a subset of assets from assets 404 corresponding to a pizza business entity, including descriptions 442, 443, logos 445, 446, and images 447, 448 that may be included in a generated new video component.

The digital content generation system 390,may combine some or all of the subset of assets into new digital content. The new digital content may be, for example, an image, text, video, etc. For instance, and as further illustrated in Figure 4, the subset of assets including description 443, logo 446, and image 447 are integrated into frame 434 of digital content, *e.g.*, video component 440. In this regard, video component 440 includes a horizontally oriented video including frame 434 having the logo 446 overlaid on image 447. Although video component 440 is horizontally oriented, the video component creation cool may generate video components in any format or orientation. For example, the video component creation tool may generate video components in a vertical orientation or different aspect ratios. In some instances, the video component creation tool may create the same video component in different orientations and/or aspect ratios for deployment across different devices and mediums, such as TV, mobile, web, etc.

Although not shown, the digital content generation system 390 may generate a voiceover of description 443 that plays back with the video component 440. Alternatively, or additionally, the AACGS may overlay the description 443 itself over an image, such as one of images 407, a logo, such as logo 445 or 446, or another image or video, such as a stock video or image available to the video component creation tool.

In some instances, the digital content generation system 390,may analyze the assets of an entity to determine characteristics of the entity, such as the entity's color(s) and/or font(s). Moreover, the video component creation tool may analyze the assets to determine the entity's "personalities," such as sincere, authentic, competent, exciting, sophisticated, rugged, etc. The personality of the entity may correspond to the style of the entity. Such characteristics and personalities may be incorporated into generated video components for the entities.

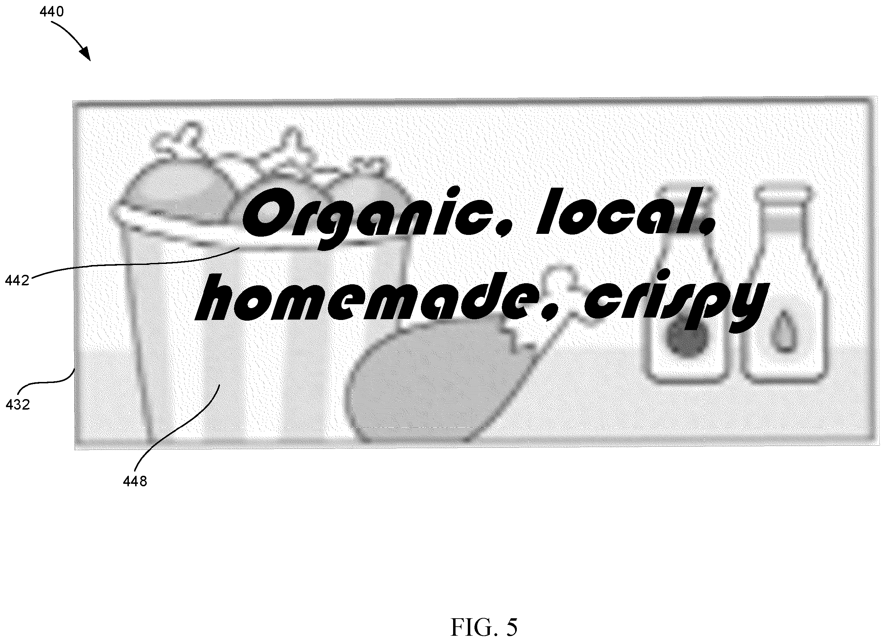

For example, the digital content generation system 390may analyze assets 404 and determine the pizza business has an "authentic personality" and a font as used in logo 445. The video component creation tool may generate one or more frames in the video based on the determined personality and characteristics. For example, Figure 5 illustrates a frame 432 of the video component 440 created by the video component creation tool for the pizza business. Frame 432 includes text 442 overlaid on image 448. The text 442 has been formatted in the font of the logo 445 which was identified as a font associated with the pizza business. The video component creation tool included text 443 since it represents the "authentic personality" of the pizza business.

Although the two frames 434, 432 of video component 440 illustrate a subset of assets selected from assets 404, a video component may include any number of assets. The order of the assets within the video component and the length of time each asset is displayed or otherwise played back in the video component may also be determined by the video component creation tool and/or based on input from a user.

The assets may be stored in one or more databases or may be uploaded at the time the video component creation tool generates a new video component. For instance, the video component creation tool may retrieve assets from web resources such as web pages, app store landing pages, etc., associated with the entity for which the new video component is being generated. Additionally, or alternatively, a user may upload assets to the video component creation tool or a location accessible by the video component creation tool, such as a database.

As described herein, assets may include text, logos, images, videos, etc., and other such multimedia. Although assets are described as being one piece of multimedia, such as a text or a logo, a piece of multimedia can include more than one asset. For instance, a piece of multimedia, such as a logo, may include assets including the logo itself, as well as the text of the logo. In another example, a video asset may include any number of image assets, logo assets within the image assets, audio assets within the video asset, and text within the video asset. In some instances, assets contained within other assets may be identified, stored, and/or otherwise retrieved by artificial intelligence models trained to identify particular asset types, visual and textual recognition algorithms, etc.

The digital content generation system 390 may identify a subset of assets to include in a video component, determine the characteristics and personality of an entity, and generate video components using machine learning models. These machine learning models can be implemented in a system, such as AACGS 301.

### Example Methods

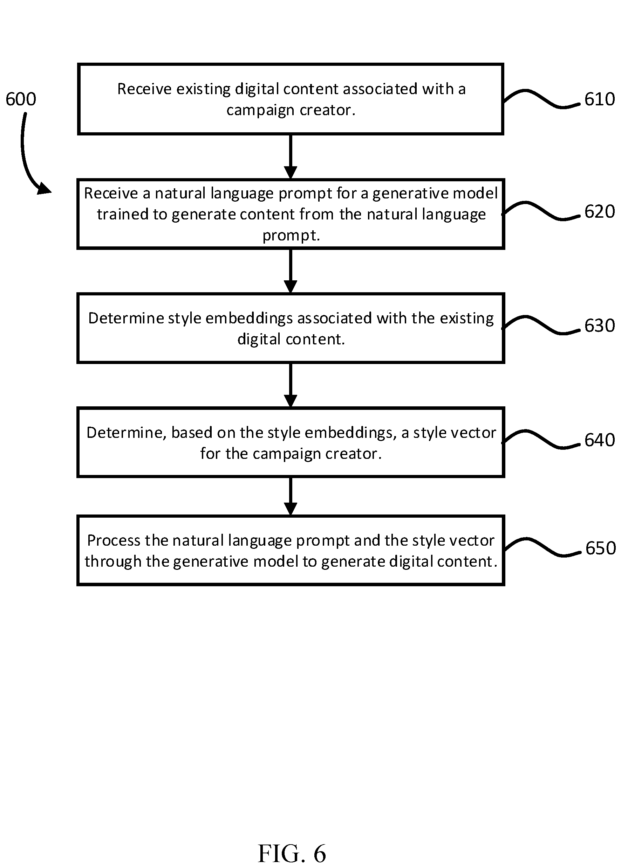

Figure 6 depicts a flow diagram of an example process 600 for generating digital content, according to aspects of the disclosure. The example process can be performed on a system of one or more processors in one or more locations, such as the digital content generation system 190 of Figure 1. The following operations do not have to be performed in the precise order described below. Rather, various operations can be handled in a different order or simultaneously, and operations may be added or omitted.

In block 610, the system receives existing digital content associated with a campaign creator. The system may include, for example, a digital content generation system, such as the digital content generation system 190 described with reference to Figure 1. The one or more and existing digital content associated with the campaign creator can be received from a campaign management platform, such as campaign management platform 150 described with reference to Figure 1.

In block 620, the system receives a natural language prompt for a generative model trained to generate content from the natural language prompt. The natural language prompt includes changes to be made to the existing digital content and group information associated with a campaign.

In block 630, the system determines style embeddings associated with the existing digital content. To determine the style embeddings, the existing digital content is clustered based on visual similarities within the existing digital content. The visual similarities may include, for example, a color scheme, a theme, an event, a style, or the like. In some examples, the visual similarities may be based on the subjects within the existing digital content, *e.g.*, humans, animals, nature, etc. Once clustered, the style embeddings for the clusters may be determined. By determining the style embedding for a cluster, as compared to the style embedding for all the existing digital content, computational resources, such as processing power and network overhead, are saved.

In block 640, the system determines, based on the style embeddings, a style vector for the campaign creator. Determining the style vector includes determining an average of a difference between the style embeddings. The average of the difference between each of the style embeddings corresponds to the style vector.

In block 650, the system processes the natural language prompt and the style through the generative model to generate digital content. The generated digital content is based on the existing digital content. For example, when processing the national language prompt and the style vector through the generative model, the generative model is configured to modify existing digital content based on the natural language prompt and the style vector. In some examples, the generative model is configured to generate new digital content based on the natural language prompt and the style vector.

According to some examples, the system may generate seed information based on the natural language prompt. The system may include a seed generation engine, such as seed generation engine 195 in Figure 1. The seed information may be used to identify a theme. For example, the system may include an identification engine, such as identification engine 175 in Figure 1. The identification engine may identify the theme based on the seed information. The theme may be used to identify embeddings within a threshold distance of the theme. For example, the system may include an image embeddings fetcher, such as image embeddings fetcher 105 in Figure 1. The fetched embeddings may include embeddings related to the theme. The embeddings are processed through the generative model, in conjunction with the natural language prompt and the style vector through the generative model to generate digital content.

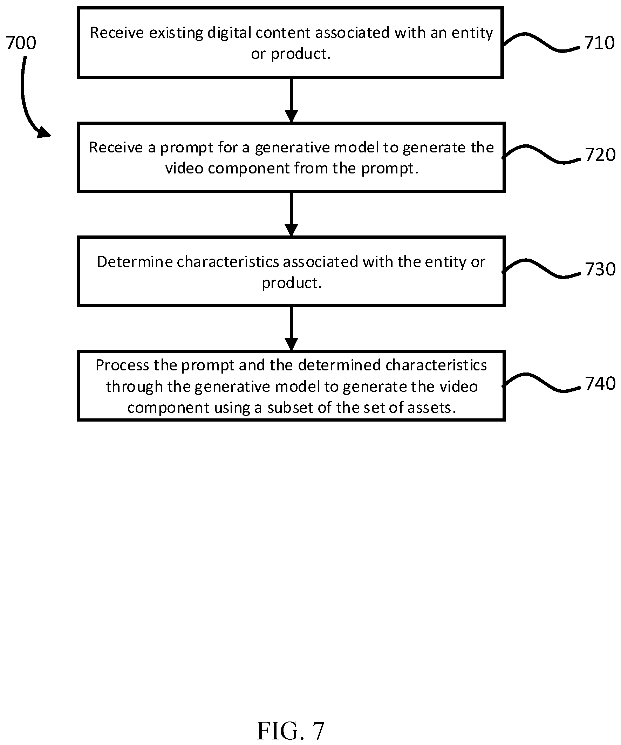

Figure 7 depicts a flow diagram of an example process 700 for generating digital content, according to aspects of the disclosure. The example process can be performed on a system of one or more processors in one or more locations, such as the digital content generation system 390 of Figure 3. The following operations do not have to be performed in the precise order described below. Rather, various operations can be handled in a different order or simultaneously, and operations may be added or omitted.

In block 710, the system receives existing digital content associated with an entity creator or product. The existing digital content comprises a set of assets. The entity may be, for example, a content creator. In some examples, the system receives existing digital content associated with the entity, content creator, and/or product. The system may identify, based on the received digital content, a set of assets. In some examples, the digital content associated with the entity, content creator, and/or product corresponds to the set of assets. The assets include text, logos, images, audio, and/or videos.

In block 720, the system receives a prompt for a generative model to generate a video component from the prompt.

In block 730, the system determines characteristics associated with the entity. The determined characters may include, for example, a color, font, style, etc. associated with the entity, content creator, and/or product. The determined characteristics are determined by a characteristic engine. The characteristic engine is trained to determine characteristics, e.g., color, font, etc., associated with an entity, content creator, and/or product.

In block 740, the system processes the prompt and the determined characteristics through the generative model to generate digital content, such as a video component, using a subset of the set of assets. The subset of assets may be determined by a representation engine. The representation engine is trained to identify the subset of assets. The digital content, *e.g.*, the video component, is generated by a creation engine. The creation engine is trained to generate digital content, such as video components, from a collection of assets for an entity, content creator, and/or product.

In some examples, the system determines a personality associated with the entity, content creator, and/or product. The personality may be determined by a personality engine. The personality engine is trained to determine the personality of the entity, content creator, and/or product. In some examples, the personality of the entity, content creator, and/or product corresponds to the style of the entity, content creator, and/or product. The style of the entity, content creator, and/or product may be determined using embeddings associated with the existing digital content of the entity, content creator, and/or product, as described with respect to Figure 1.

In some examples, the system determines features associated with the existing digital content. The features comprise at least one of embeddings associated with the existing digital content or natural language description of the existing digital content. The features may be processed along with the prompt and determined characteristics through the generative model when generating the video component.

Implementations of the present technology can each include, but are not limited to, the following. The features may be alone or in combination with one or more other features described herein. In some examples, the following features are included in combination:
(1) A method for serving digital content, comprising: receiving, by one or more processors, existing digital content associated with a campaign creator; receiving, by the one or more processors, a natural language prompt for a generative model trained to generate content from the natural language prompt; determining, by the one or more processors, style embeddings associated with the existing digital content; determining, by the one or more processors based on the style embeddings, a style vector for the campaign creator; and processing, by the one or more processors, the natural language prompt and the style vector through the generative model to generate digital content, wherein the generated digital content is based on the existing digital content.
(2) The method of (1), wherein when determining the style vector, the method further comprises determining, by the one or more processors based on the style embeddings, an average of a difference between the style embeddings, wherein the average of the difference between the style embeddings corresponds to the style vector.
(3) The method of (1) or (2), wherein when determining the style embeddings, the method further comprises: clustering, by the one or more processors based on visual similarities, the existing digital content; and determining, by the one or more processors, the style embeddings for the clustered existing digital content.
(4) The method of any of (1) through (3), further comprising: generating, by the one or more processors based on the natural language prompt, seed information; determining, by the one or more processors based on the seed information, a theme; and identifying, by the one or more processors based on the theme, embeddings within a threshold distance of the theme.
(5) The method of (4), wherein the embeddings are processed through the generative model to generate the digital content.
(6) The method of any of (1) through (5), wherein when processing the natural language prompt and the style vector through the generative model to generate the digital content, the generative model is configured to: modify existing digital content based on the natural language prompt and the style vector; or generate new digital content based on the natural language prompt and the style vector.
(7) The method of any of (1) through (6), wherein the natural language prompt comprises changes to be made to the existing digital content and group information associated with a campaign.
(8) A system comprising one or more processors, the one or more processors configured to perform the method of any of (1) through (7).
(9) One or more non-transitory computer-readable storage media storing instructions that are operable, when executed by one or more processors, to cause the processors to perform operations as in the method of any of (1) through (7).
(10) A method for generating a video component, the method comprising: receiving, by one or more processors, existing digital content associated with an entity or product, wherein the existing digital content comprises a set of assets; receiving, by one or more processors, a prompt for a generative model to generate the video component from the prompt; determining, by the one or more processors, characteristics associated with the entity or product; and processing, by the one or more processors, the prompt and the determined characteristics through the generative model to generate the video component using a subset of the set of assets.
(11) The method of (10), wherein the set of assets includes one or more text, logos, images, audio, or videos.
(12) The method of (10) or (11), wherein the determined characteristics include one or more of a color or a font associated with the entity or product.
(13) The method of any of (10) through (12), wherein the subset of assets is determined by a representation engine.
(14) The method of any of (10) through (13), wherein the generative model comprises a characteristic engine configured to determine the characteristics associated with the entity or product.
(15) The method of any of (10) through (14), further comprising: determining a personality associated with the entity or product, wherein: the personality associated with the entity or product is based on embeddings associated with the existing digital content, and generating the video component includes using the determined personality.
(16) The method of (15), wherein the generative model comprises a personality engine configured to determine the personality of the entity or product.
(17) The method of any of (10) through (16) , further comprising determining, by the one or more processors, features associated with the existing digital content.
(18) The method of (17), wherein the processing further comprises processing the determined features through the generative model to generate the video component.
(19) The method of (17), wherein the features comprise at least one of embeddings associated with the existing digital content or natural language description of the existing digital content.
(20) A system comprising one or more processors, the one or more processors configured to perform the method of any of (10) through (19).
(21) One or more non-transitory computer-readable storage media storing instructions that are operable, when executed by one or more processors, to cause the processors to perform operations as in the method of any of (10) through (19).

### Example Computing Environment

Figure 8 is a block diagram illustrating one or more models 810, such as for deployment in a datacenter 820 housing one or more hardware accelerators 830 on which the deployed models will execute for generating digital content according to prompts generated and stored in accordance with aspects of the disclosure. The models 810 can include, for example, generative models 110, 210, 310, and/or AACGS 301. The hardware accelerators 830 can be any type of processor, such as a central processing unit (CPU), graphics processing unit (GPU), field-programmable gate array (FPGA), or an application-specific integrated circuit (ASIC), such as a tensor processing unit (TPU).

In some implementations, the techniques disclosed herein generate digital content from prompts generated and stored according to aspects of the disclosure, using artificial intelligence. Artificial intelligence (AI) is a segment of computer science that focuses on the creation of models that can perform tasks with little to no human intervention. Artificial intelligence systems can utilize, for example, machine learning, natural language processing, and computer vision. Machine learning, and its subsets, such as deep learning, focus on developing models that can infer outputs from data. The outputs can include, for example, predictions and/or classifications. Natural language processing focuses on analyzing and generating human language. Computer vision focuses on analyzing and interpreting images and videos. Artificial intelligence systems can include generative models that generate new content, such as images, videos, text, audio, and/or other content, in response to input prompts and/or based on other information.

Example machine-learned models include neural networks or other multi-layer non-linear models. Example neural networks include feed forward neural networks, deep neural networks, recurrent neural networks, and convolutional neural networks. Some example machine-learned models can leverage an attention mechanism such as self-attention. For example, some machine-learned models can include multi-headed self-attention models (e.g., transformer models).

The model(s) can be trained using various training or learning techniques. The training can implement supervised learning, unsupervised learning, reinforcement learning, etc. The training can use techniques such as, for example, backwards propagation of errors. For example, a loss function can be backpropagated through the model(s) to update one or more parameters of the model(s) (e.g., based on a gradient of the loss function). Various loss functions can be used such as mean squared error, likelihood loss, cross entropy loss, hinge loss, and/or various other loss functions. Gradient descent techniques can be used to iteratively update the parameters over a number of training iterations. A number of generalization techniques (e.g., weight decays, dropouts) can be used to improve the generalization capability of the models being trained.

The model(s) can be pre-trained before domain-specific alignment. For instance, a model can be pre-trained over a general corpus of training data and fine-tuned on a more targeted corpus of training data. A model can be aligned using prompts that are designed to elicit domain-specific outputs. Prompts can be designed to include learned prompt values (e.g., soft prompts). The trained model(s) may be validated prior to their use using input data other than the training data and may be further updated or refined during their use based on additional feedback/inputs.

An architecture of a model can refer to characteristics defining the model, such as characteristics of layers for the model, how the layers process input, or how the layers interact with one another. For example, the model can be a convolutional neural network that includes a convolution layer that receives input data, followed by a pooling layer, followed by a fully connected layer that generates a result. The architecture of the model can also define types of operations performed within each layer. For example, the architecture of a convolutional neural network may define that rectified linear unit (ReLU) activation functions are used in the fully connected layer of the network. Other example architectures can include generative models, such as language models, foundation models, and/or graphical models. One or more model architectures can be generated that can output results associated with generating digital content from prompts generated or stored by the digital content generation system 190, 290, 390.

As another example, with respect to reinforcement learning, situations encountered by an agent, e.g., a model, a computing device, a system, a robot, etc., are mapped to actions taken by the agent in those situations to maximize the reward or value of its actions. The agent can interact with an environment through its actions. At any given time or point at which the agent can act, the environment can be represented as a state. The state can include any information or features about the environment that can be known by the agent. The value of a state is a measure of the total amount of reward the agent can receive from the current state and future states accessible from the current state. A value function can be defined or estimated for calculating, predicting, or estimating the value of a state. Techniques for training a machine learning model via reinforcement learning can focus on estimating or learning value functions to accurately predict value across different states of an environment.

The model or policy can be modified or updated until stopping criteria are met, such as a number of iterations for training, a maximum period of time, a convergence of estimated rewards or value between actions, or when a minimum value threshold is met. A model can be a composite of multiple models or components of a processing or training pipeline. In some examples, the models or components are trained separately, while in other examples, the models or components are trained end-to-end.

Figure 9 is a block diagram of an example computing environment 500 for implementing the digital content generation system 190, 290, 390. The digital content generation system 190, 290, 390 can be implemented on one or more devices having one or more processors in one or more locations, such as in server computing device 515. User computing device 512 and the server computing device 515 can be communicatively coupled to one or more storage devices 530 over a network 560. The storage device(s) 530 can be a combination of volatile and non-volatile memory and can be at the same or different physical locations than the computing devices 512, 515. For example, the storage device(s) 530 can include any type of non-transitory computer readable medium capable of storing information, such as a hard-drive, solid state drive, tape drive, optical storage, memory card, ROM, RAM, DVD, CD-ROM, write-capable, and read-only memories.

Aspects of the disclosure can be implemented in a computing system that includes a back-end component, e.g., as a data server, a middleware component, e.g., an application server, or a front-end component, e.g., user computing device 512 having a user interface, a web browser, or an app, or any combination thereof. The components of the system can be interconnected by any form or medium of digital data communication, such as a communication network. Examples of communication networks include a local area network (LAN) and a wide area network (WAN), e.g., the Internet. The datacenter 820 can also be in communication with the user computing device 512 and the server computing device 515.

The computing system can include clients, e.g., user computing device 512 and servers, e.g., server computing device 515. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

The server computing device 515 can include one or more processors 513 and memory 514. The memory 514 can store information accessible by the processor(s) 513, including instructions 521 that can be executed by the processor(s) 513. The memory 514 can also include data 523 that can be retrieved, manipulated, or stored by the processor(s) 513. The memory 514 can be a type of non-transitory computer readable medium capable of storing information accessible by the processor(s) 513, such as volatile and non-volatile memory. The processor(s) 513 can include one or more central processing units (CPUs), graphic processing units (GPUs), field-programmable gate arrays (FPGAs), and/or application-specific integrated circuits (ASICs), such as tensor processing units (TPUs).

The instructions 521 can include one or more instructions that when executed by the processor(s) 513, causes the one or more processors to perform actions defined by the instructions. The instructions 521 can be stored in object code format for direct processing by the processor(s) 513, or in other formats including interpretable scripts or collections of independent source code modules that are interpreted on demand or compiled in advance. The instructions 521 can include instructions for implementing the digital content generation system 190 consistent with aspects of this disclosure. The digital content generation system 190 can be executed using the processor(s) 513, and/or using other processors remotely located from the server computing device 515.

The data 523 can be retrieved, stored, or modified by the processor(s) 513 in accordance with the instructions 521. The data 523 can be stored in computer registers, in a relational or non-relational database as a table having a plurality of different fields and records, or as JSON, YAML, proto, or XML documents. The data 523 can also be formatted in a computer-readable format such as, but not limited to, binary values, ASCII, or Unicode. Moreover, the data 523 can include information sufficient to identify relevant information, such as numbers, descriptive text, proprietary codes, pointers, references to data stored in other memories, including other network locations, or information that is used by a function to calculate relevant data.

The user computing device 512 can also be configured similar to the server computing device 515, with one or more processors 516, memory 517, instructions 518, and data 519. For example, the user computing device 512 can be a mobile device, a laptop, a desktop computer, a game console, etc. The user computing device 512 can also include a user output 526, and a user input 524. The user input 524 can include any appropriate mechanism or technique for receiving input from a user, including acoustic input; visual input; tactile input, including touch motion or gestures, or kinetic motion or gestures or orientation motion or gestures; auditory input, speech input, etc., Example devices for user input 524 can include a keyboard, mouse or other point device, mechanical actuators, soft actuators, touchscreens, microphones, and sensors.

The server computing device 515 can be configured to transmit data to the user computing device 512, and the user computing device 512 can be configured to display at least a portion of the received data on a display implemented as part of the user output 526. The user output 526 can also be used for displaying an interface between the user computing device 512 and the server computing device 515. The user output 526 can alternatively or additionally include one or more speakers, transducers or other audio outputs, a haptic interface or other tactile feedback that provides non-visual and non-audible information to the platform user of the user computing device 512.

Although Figure 9 illustrates the processors 513, 516 and the memories 514, 517 as being within the computing devices 515, 512, components described in this specification, including the processors 513, 516 and the memories 514, 517 can include multiple processors and memories that can operate in different physical locations and not within the same computing device. For example, some of the instructions 521, 518 and the data 523, 519 can be stored on a removable SD card and others within a read-only computer chip. Some or all the instructions and data can be stored in a location physically remote from, yet still accessible by, the processors 513, 516. Similarly, the processors 513, 516 can include a collection of processors that can perform concurrent and/or sequential operation. The computing devices 515, 512 can each include one or more internal clocks providing timing information, which can be used for time measurement for operations and programs run by the computing devices 515, 512.

The server computing device 515 can be configured to receive requests to process data from the user computing device 512. For example, the environment 500 can be part of a computing platform configured to provide a variety of services to users, through various user interfaces and/or APIs exposing the platform services. One or more services can be a machine learning framework or a set of tools for training or executing generative models or other machine learning models according to a specified task and training data.

The devices 512, 515 can be capable of direct and indirect communication over the network 560. The devices 515, 512 can set up listening sockets that may accept an initiating connection for sending and receiving information. The network 560 itself can include various configurations and protocols including the Internet, World Wide Web, intranets, virtual private networks, wide area networks, local networks, and private networks using communication protocols proprietary to one or more companies. The network 560 can support a variety of short- and long-range connections. The short- and long-range connections may be made over different bandwidths, such as 2.402 GHz to 2.480 GHz (commonly associated with the Bluetooth^{®} standard), 2.4 GHz and 5 GHz (commonly associated with the Wi-Fi^{®} communication protocol); or with a variety of communication standards, such as the LTE^{®} standard for wireless broadband communication. The network 560, in addition or alternatively, can also support wired connections between the devices 512, 515, including over various types of Ethernet connection.

Although a single server computing device 515, user computing device 512, and datacenter 820 are shown in Figure 9, it is understood that the aspects of the disclosure can be implemented according to a variety of different configurations and quantities of computing devices, including in paradigms for sequential or parallel processing, or over a distributed network of multiple devices. In some implementations, aspects of the disclosure can be performed on a single device, and any combination thereof.

Aspects of this disclosure can be implemented in digital electronic circuitry, in tangibly-embodied computer software or firmware, and/or in computer hardware, such as the structure disclosed herein, their structural equivalents, or combinations thereof. Aspects of this disclosure can further be implemented as one or more computer programs, such as one or more engines or modules of computer program instructions encoded on one or more tangible non-transitory computer storage media for execution by, or to control the operation of, one or more data processing apparatus.

A computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, that is generated to encode information for transmission to suitable receiver apparatus for execution by a data processing apparatus. A computer program may, but need not, correspond to a file in a file system. A computer program can be stored in a portion of a file that holds other programs or data, e.g., one or more scripts, in a single file, or in multiple coordinated files, e.g., files that store one or more engines, modules, sub-programs, or portions of code.

The term "configured" is used herein in connection with systems and computer program components. For a system of one or more computers to be configured to perform particular operations or actions means that the system has installed software, firmware, hardware, or a combination thereof that cause the system to perform the operations or actions. For one or more computer programs to be configured to perform operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC), such as a Tensor Processing Unit (TPU). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks, such as static or dynamic computational graph frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" can refer to a software-based system, subsystem, or process that is programmed to perform one or more specific functions. The engine can be implemented as one or more software modules or components or can be installed on one or more computers in one or more locations. A particular engine can have one or more processors or computing devices dedicated thereto, or multiple engines can be installed and running on the same processor or computing device. In some examples, an engine can be implemented as a specially configured circuit, while in other examples, an engine can be implemented in a combination of software and hardware.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers. While operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all examples, and it should be understood that the described program components and systems can be integrated together in one or more software or hardware-based devices or computer-readable media.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, desktop computer, a personal digital assistant (PDA), a mobile audio or video player, a game console, a tablet, a virtual-reality (VR) or augmented-reality (AR) device, a Global Positioning System (GPS), or a portable storage device, e.g., a universal serial bus (USB) flash drive, as examples. Examples of the computer or special purpose logic circuitry can include the user computing device 512, the server computing device 515, or the hardware accelerators 830.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible examples. Further, the same reference numbers in different drawings can identify the same or similar elements.

## Claims

1. A method for serving digital content, comprising:
receiving, by one or more processors, existing digital content associated with a campaign creator;
receiving, by the one or more processors, a natural language prompt for a generative model trained to generate content from the natural language prompt;
determining, by the one or more processors, style embeddings associated with the existing digital content;
determining, by the one or more processors based on the style embeddings, a style vector for the campaign creator; and
processing, by the one or more processors, the natural language prompt and the style vector through the generative model to generate digital content, wherein the generated digital content is based on the existing digital content.

2. The method of claim 1, wherein when determining the style vector, the method further comprises determining, by the one or more processors based on the style embeddings, an average of a difference between the style embeddings, wherein the average of the difference between the style embeddings corresponds to the style vector.

3. The method of claim 1, wherein when determining the style embeddings, the method further comprises:
clustering, by the one or more processors based on visual similarities, the existing digital content; and
determining, by the one or more processors, the style embeddings for the clustered existing digital content.

4. The method of claim 1, further comprising:
generating, by the one or more processors based on the natural language prompt, seed information;
determining, by the one or more processors based on the seed information, a theme; and
identifying, by the one or more processors based on the theme, embeddings within a threshold distance of the theme.

5. The method of claim 4, wherein the embeddings are processed through the generative model to generate the digital content.

6. The method of claim 1, wherein when processing the natural language prompt and the style vector through the generative model to generate the digital content, the generative model is configured to:
modify existing digital content based on the natural language prompt and the style vector; or
generate new digital content based on the natural language prompt and the style vector.

7. The method of claim 1, wherein the natural language prompt comprises changes to be made to the existing digital content and group information associated with a campaign.

8. A system for serving digital content, comprising:
one or more processors, the one or more processors configured to:
receive existing digital content associated with a campaign creator;
receive a natural language prompt for a generative model trained to generate content from the natural language prompt;
determine style embeddings associated with the existing digital content;
determine, based on the style embeddings, a style vector for the campaign creator; and
process the natural language prompt and the style vector through the generative model to generate digital content, wherein the generated digital content is based on the existing digital content.

9. The system of claim 8, wherein when determining the style vector, the one or more processors are further configured to determine, based on the style embeddings, an average of a difference between the style embeddings, wherein the average of the difference between the style embeddings corresponds to the style vector.

10. The system of claim 8, wherein when determining the style embeddings, the one or more processors are further configured to:
cluster, based on visual similarities, the existing digital content; and
determine the style embeddings for the clustered existing digital content.

11. The system of claim 8, wherein the one or more processors are further configured to:
generate, based on the natural language prompt, seed information;
determine, based on the seed information, a theme; and
identify, based on the theme, embeddings within a threshold distance of the theme.

12. The system of claim 11, wherein the embeddings are processed through the generative model to generate the digital content.

13. The system of claim 8, wherein when processing the natural language prompt and the style vector through the generative model to generate the digital content, the generative model is configured to:
modify existing digital content based on the natural language prompt and the style vector; or
generate new digital content based on the natural language prompt and the style vector.

14. The system of claim 8, wherein the natural language prompt comprises changes to be made to the existing digital content and group information associated with a campaign.

15. One or more non-transitory computer-readable storage media encoding instructions that, when executed by one or more processors, cause the one or more processors to perform operations comprising a method according to any one of claims 1 to 7.
